# EUROPÄISCHE PATENTSCHRIFT

(11) **EP 1 375 218 B1**
(45) Veröffentlichungstag und Bekanntmachung des Hinweises auf die Patenterteilung: **19.01.2005**
(21) Anmeldenummer: 03013773.1
(22) Anmeldetag: 18.06.2003
(51) Int. Cl.: B60H 1/34

(54) **Einrichtung zum Zuführen von Luft in eine Fahrgastzelle**
Device for supplying air in a vehicle cabin
Dispositif d'introduction d'air dans un habitacle de véhicule

(30) Priorität: 28.06.2002 DE 10229042
(43) Veröffentlichungstag der Anmeldung: 02.01.2004
(73) Patentinhaber: Bayerische Motoren Werke Aktiengesellschaft, 80809 München (DE)
(72) Erfinder: Meyer, Heinrich, Dr., 85635 Höhenkirchen (DE); Kaltschmidt, Thilo, 80937 München (DE)

(56) Entgegenhaltungen:
- EP-A- 1 151 879
- DE-A- 3 908 541
- DE-A- 4 338 099
- DE-A- 19 832 738

## Beschreibung

Die Erfindung betrifft eine Einrichtung zum Zuführen von Luft in eine Fahrgastzelle gemäß des Oberbegriffs des Patentanspruchs 1.

Gattungsbildend ist aus der DE 43 38 099 A1 eine Einrichtung zum Zuführen von Luft in eine Fahrgastzelle eines Fahrzeugs bekannt, die eine einen Luftkanal einseitig abdeckende, großflächige, perforierte Luftaustrittsfläche für diffuse Luftverteilung aufweist. Die großflächige Luftaustrittsfläche bildet die einer Fahrzeugfrontscheibe zugewandte Oberseite einer Instrumententafel.

Eine aus der DE 39 08 541 A1 bekannte, großflächige, perforierte Luftaustrittsfläche für eine diffuse Luftverteilung ist unter dem Dach der Fahrgastzelle angeordnet und von einem luftdurchlässigen Himmel kaschiert. Der von dieser Luftaustrittsfläche abgedeckte Luftkanal ist über eine in den Seitenholmen der Fahrzeugkarosserie verlaufende Luftzuführleitung an den Luftverteilerkasten einer Klimaanlage angeschlossen.

Ferner ist aus der DE 198 07 259 A1 eine Belüftungsanlage für ein Kraftfahrzeug bekannt, die eine mit einem Luftstrom beaufschlagbare, unterhalb einer Windschutzscheibe des Kraftfahrzeugs angeordnete Ausströmdüse aufweist. Eine über der Ausströmdüse angeordnete Abdeckung hat eine Vielzahl kleiner Durchtrittsöffnungen. Die Abdeckung kann ein Netzgewebe umfassen, dessen Maschen die Durchtrittsöffnungen bilden.

Die Realisierung einer diffusen Luftverteilung scheiterte bisher hauptsächlich an der Gefahr der Verschmutzung der vor der Belüftung liegenden Verkleidungsteile. Die Oberfläche des Luftaustrittsbauteils wird bei ausgeschalteter Belüftung beispielsweise durch das Zuschlagen einer Fahrzeugtür verschmutzt, da sich der Luftstrom durch den entstehenden Überdruck im Fahrzeuginnenraum umdreht und kurzzeitig durch das Luftaustrittsbauteil Luft eintritt. Damit kann verschmutzte Luft aus dem Fahrzeuginnenraum in den sichtbaren Bereich des Luftaustrittsbauteils eintreten und dieses auf Dauer verschmutzen.

Aufgabe der Erfindung ist es, die bekannten Einrichtungen zum Zuführen von Luft in eine Fahrgastzelle mit einer großflächigen Luftaustrittsfläche für diffuse Luftverteilung zu optimieren, und insbesondere die Verschmutzung der vor der Belüftung liegenden Verkleidungsteile zuvermeiden.

Diese Aufgabe wird durch die Merkmale des Patentanspruchs 1 gelöst.

Eine Einrichtung zum Ausströmen von Luft in eine Fahrgastzelle eines Fahrzeugs weist ein großflächiges Luftaustrittsbauteil zur diffusen Luftverteilung auf. Das Luftaustrittsbauteil bildet zumindest einen sichtbaren Teil eines Verkleidungsteils. Kemgedanke der Erfindung ist es, dass das Luftaustrittsbauteil zumindest eine Membran aufweist, die ein Zurückströmen der Luft verhindert.

Durch die erfindungsgemäße Anordnung einer Membran, die zumindest unter anderem das Luftaustrittsbauteil bildet, kann das Zurückströmen von Luft vermieden werden, da die Membran einen Luftstrom nur in einer Richtung zulässt. Somit stehen der Realisierung einer diffusen Luftverteilung zumindest keine Qualitätsanforderungen bezüglich Verschmutzung mehr im Wege.

Idealerweise weist das Luftaustrittsbauteil zumindest eine luftdurchlässige, sichtbare Außenfläche auf, hinter der unmittelbar die Membran angebracht ist. Normalerweise wird das Luftaustrittsbauteil nicht nur aus der Membran bestehen, sondern eine luftdurchlässige Außenfläche, beispielsweise aus Stoff, aufweisen, die eine ansprechende Optik des Luftaustrittsbauteils sicherstellt. Um zu verhindern, dass diese Außenfläche durch zurückströmende Luft verschmutzen kann, ist die Membran unmittelbar hinter der Außenfläche angeordnet. Dadurch kann keine Luft durch die Außenfläche einströmen.

Die Membran besteht vorteilhafterweise aus einem undirektional luftdurchlässigen Material.

Erfindungsgemäß bildet das Luftaustrittsbauteil zumindest einen sichtbaren Teil eines Verkleidungsteils. In einem Fahrzeug gibt es viele Verkleidungsteile, wie beispielsweise Türverkleidungen, A-, B-, C-Säulenverkleidungen, Sitze, den Dachhimmel oder das Armaturenbrett. Vorteilhafterweise ist das Verkleidungsteil eine Instrumententafel oder ein Fahrzeughimmel. Sowohl die Instrumententafel als auch der Fahrzeughimmel weisen große Flächen auf, die zur Verbesserung des Raumklimas viel beitragen können, wenn Sie zur diffusen Luftverteilung eine Luftaustrittfläche aufweisen.

Die Membran kann günstigerweise schalldämpfende Eigenschaften aufweisen. Dazu kann beispielsweise die Durchlässigkeit oder die Dicke der Membran entsprechend gewählt werden. Aufgrund der schalldämpfenden Eigenschaften können gegebenenfalls ansonsten erforderliche akustische Maßnahmen entfallen.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Die Figuren zeigen in schematischer Darstellungsweise:

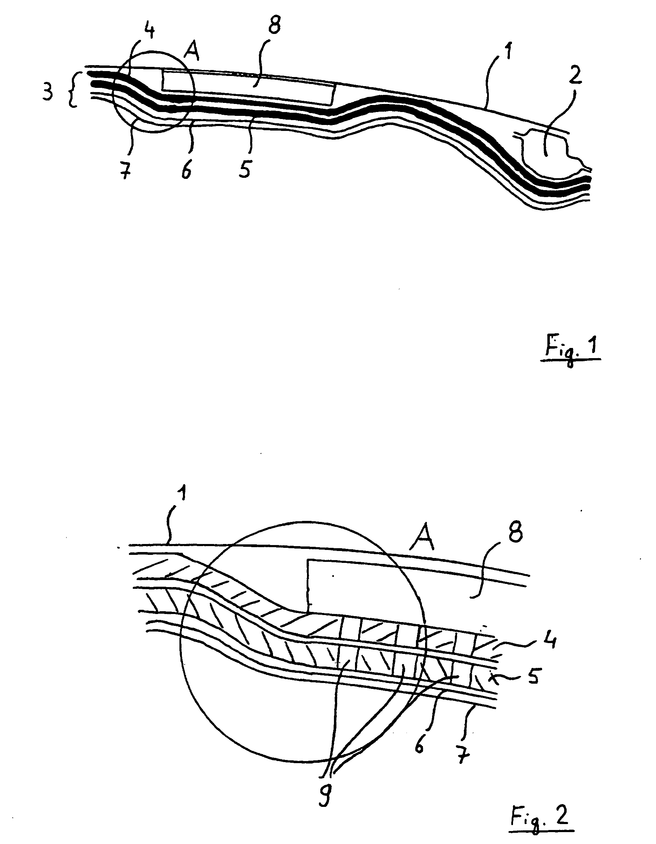

- **Fig. 1**: einen Längsschnitt durch ein Fahrzeugdach oberhalb der Rücksitze mit einer erfindungsgemäßen Einrichtung zum Ausströmen von Luft in eine Fahrgastzelle und
- **Fig. 2**: eine Detailansicht A des in **Fig. 1** gezeigten Fahrzeugdachs.

Die Figuren zeigen einen Längsschnitt durch ein Fahrzeugdach. Das Fahrzeugdach besteht aus einer Außenhaut 1 aus Blech, die - in Fahrtrichtung des Fahrzeugs gesehen - an der Hinterkante auf einem Querspriegel 2 aufliegt. Zum Fahrzeuginnenraum hin ist das Fahrzeugdach mit einem Dachhimmel 3 verkleidet. Der Dachhimmel 3 besteht in Sandwichbauweise aus einer faserverstärkten Kunststoffplatte 4 als Trägermaterial, einer Schaumschicht 5, einer Membran 6 aus Goretex und einer sichtbaren Außenfläche 7 aus dekorativem, luftdurchlässigem Stoff. Zwischen der Außenhaut 1 und dem Dachhimmel 3 befindet sich im Bereich oberhalb der Rücksitze ein Hohlraum 8. Die Kunststoffplatte 4 und die Schaumschicht 5 sind im Bereich unterhalb des Hohlraums 8 mit vielen kleinen Löchern 9 gleichmäßig perforiert. In den Hohlraum 8 mündet ein hier nicht dargestellter Luftkanal zur Belüftung. Der Anschluss des Luftkanals ist auf der der Außenhaut 1 zugewandten Rückseite der Kunststoffplatte 4 angebracht.

Wenn nun zur Belüftung Luft über den Luftkanal in den Hohlraum 8 geleitet wird, kann diese Luft durch die vielen kleinen Löcher 9 in der Kunststoffplatte 4 und in der Schaumschicht 5, durch die Membran 6 und die sichtbare, dekorative, luftdurchlässige Außenfläche 7 hindurch in den Fahrzeuginnenraum strömen. Die Membran 6 ist in dieser Richtung luftdurchlässig. Je größer der Hohlraum 8 in seiner Breite und Tiefe ist, desto diffuser kann die Luft in den Fahrzeuginnenraum strömen. Das Luftaustrittsbauteil wird dabei durch den Bereich des Dachhimmels 3 unterhalb des Hohlraums 8 gebildet.

Während die Membran 6 in der Richtung vom Hohlraum 8 zum Fahrzeuginnenraum Luft hindurch strömen lässt, stellt sie in der anderen Richtung eine zumindest annähernd luftundurchlässige Sperrschicht dar. Wenn die Belüftung ausgeschaltet ist, sodass keine Luft in den Hohlraum 8 geleitet wird, und eine Fahrzeugtür zugeschlagen wird, entsteht im Fahrzeuginnenraum gegenüber dem Hohlraum 8 kurzfristig ein Überdruck. Dennoch kann keine Luft vom Fahrzeuginnenraum in den Hohlraum 8 strömen, da in dieser Richtung die Membran 6 als Sperrschicht fungiert. Dadurch wird verhindert, dass Schmutz aus der Luft im Fahrzeuginnenraum in die Außenfläche 7 eindringen kann, und diese verschmutzt. Dies ist ein wesentlicher Faktor, um über die Lebensdauer des Fahrzeugs die Qualitätsanforderungen bezüglich Verschmutzung erfüllen zu können.

Die Membran 6 ist relativ dick und stellt auch in der luftdurchlässigen Richtung für die Luft einen spürbaren Luftwiderstand dar. Dies ist zwar scheinbar nachteilig, hat aber den großen Vorteil, dass die Membran 6 so zugleich gute schalldämpfende Eigenschaften aufweist. Im Bereich des Hohlraums 8 kann daher eine zusätzliche Schicht zur Schalldämpfung zwischen Außenhaut 1 und Dachhimmel 3 entfallen.

Die faserverstärkte Kunststoffplatte 4 und / oder die Schaumschicht 5 können anstelle der Perforierung unterhalb des Hohlraums 8 auch zumindest partiell ausgespart sein. Dadurch kann die Luftmenge, die durch die Luftaustrittsbauteil durchtreten kann, erhöht werden.

## Patentansprüche

1. Einrichtung zum Ausströmen von Luft in eine Fahrgastzelle eines Fahrzeugs mit einem großflächigen Luftaustrittsbauteil zur diffusen Luftverteilung, das zumindest einen sichtbaren Teil eines Verkleidungsteils bildet, **dadurch gekennzeichnet, dass** das Luftaustrittsbauteil zumindest eine Membran (6) aufweist, die ein Zurückströmen der Luft verhindert.

2. Einrichtung nach Anspruch 1, **dadurch gekennzeichnet, dass** das Luftaustrittsbauteil zumindest eine luftdurchlässige, sichtbare Außenfläche (7) aufweist, hinter der unmittelbar die Membran (6) angebracht ist.

3. Einrichtung nach einem der vorhergehenden Ansprüche, **dadurch gekennzeichnet, dass** das Verkleidungsteil eine Instrumententafel ist.

4. Einrichtung nach Anspruch 1 oder 2, **dadurch gekennzeichnet, dass** das Verkleidungsteil ein Fahrzeughimmel (3) ist.

5. Einrichtung nach Anspruch 4, **dadurch gekennzeichnet, dass** der Fahrzeughimmel (3) in Sandwichbauweise im Ausströmbereich der Luft zumindest folgende Schichten aufweist: Trägermaterial (4), Membran (6), sichtbare Außenfläche (7).

6. Einrichtung nach Anspruch 5, **dadurch gekennzeichnet, dass** das Trägermaterial (4) im Ausströmbereich der Luft zumindest partiell ausgespart ist.

7. Einrichtung nach Anspruch 6, **dadurch gekennzeichnet, dass** auf der Rückseite des Trägermaterials (4) zumindest ein Anschluss zu einem Luftkanat angebracht ist.

8. Einrichtung nach einem der vorhergehenden Ansprüche, **dadurch gekennzeichnet, dass** die Membran (6) schalldämpfende Eigenschaften hat.

## Claims

1. A device for discharging air into a passenger compartment of a vehicle comprising a large-area air exit component for diffused air distribution, which forms at least a visible part of a lining part, **characterised in that** the air exit component has at least one membrane (6) which prevents the air flowing back.

2. A device according to claim 1, **characterised in that** the air exit component has at least one air-permeable, visible outer face (7), behind which the membrane (6) is directly attached.

3. A device according to any one of the preceding claims, **characterised in that** the lining part is an instrument panel.

4. A device according to claim 1 or claim 2, **characterised in that** the lining part is a vehicle inside roof lining (3).

5. A device according to claim 4, **characterised in that**, in a sandwich construction in the discharge region of the air, the vehicle inside roof lining (3) has at least the following layers: carrier material (4), membrane (6), visible outer face (7).

6. A device according to claim 5, **characterised in that** the carrier material (4) is at least partially recessed in the discharge region of the air.

7. A device according to claim 6, **characterised in that** at least one connection to an air duct is provided on the rear of the carrier material (4).

8. A device according to any one of the preceding claims, **characterised in that** the membrane (6) has sound-insulating properties.

## Revendications

1. Dispositif pour délivrer de l'air dans un habitacle d'un véhicule automobile, comprenant un élément de sortie d'air de grande surface permettant une répartition diffuse de l'air qui forme au moins une partie visible d'un élément de garniture,
**caractérisé en ce que**
l'élément de sortie d'air présente au moins une membrane (6) qui empêche un retour de l'air.

2. Dispositif selon la revendication 1,
**caractérisé en ce que**
l'élément de sortie d'air présente au moins une surface extérieure (7) visible laissant passer l'air, derrière laquelle est disposée directement la membrane (6).

3. Dispositif selon l'une des revendications précédentes,
**caractérisé en ce que**
l'élément de garniture est un tableau de bord.

4. Dispositif selon la revendication 1 ou 2,
**caractérisé en ce que**
l'élément de garniture est un plafond de véhicule (3).

5. Dispositif selon la revendication 4,
**caractérisé en ce que**
le plafond du véhicule (3) présente au moins les couches suivantes disposées en forme de sandwich dans la zone de libération de l'air : un matériau support (4), une membrane (6), une surface extérieure (7) visible.

6. Dispositif selon la revendication 5,
**caractérisé en ce que**
le matériau support (4) est évidé au moins partiellement dans la zone de libération de l'air.

7. Dispositif selon la revendication 6,
**caractérisé en ce que**
sur la face arrière du matériau support (4), est disposé au moins un raccordement à une conduite d'air.

8. Dispositif selon l'une des revendications précédentes,
**caractérisé en ce que**
la membrane (6) a des propriétés d'atténuation du bruit.
